# FASCICULE DE BREVET EUROPEEN

(11) **EP 1 344 375 B1**
(45) Date de publication et mention de la délivrance du brevet: **29.10.2008**
(21) Numéro de dépôt: 01271731.0
(22) Date de dépôt: 14.12.2001
(51) Int. Cl.: H04M 1/66, H04Q 7/32

(54) **PROCEDE DE LUTTE CONTRE LE VOL DE DISPOSITIFS MOBILES, DISPOSITIF ET INSTALLATION CORRESPONDANTS**
VERFAHREN ZUM SCHUTZ VON MOBILEINRICHTUNGEN VOR DIEBSTAHL, ENTSPRECHENDE EINRICHTUNG UND INSTALLATION
METHOD FOR PROTECTING MOBILE DEVICES AGAINST THEFT, CORRESPONDING DEVICE AND INSTALLATION

(30) Priorité: 18.12.2000 FR 0016486
(43) Date de publication de la demande: 17.09.2003
(73) Titulaire: Toffolet, Richard, 75003 Paris (FR)
(72) Inventeur: Toffolet, Richard, 75003 Paris (FR)
(74) Mandataire: Sauvage, Renée
(86) Numéro de dépôt international: PCT/FR2001/003997
(87) Numéro de publication internationale: WO 2002/051106

(56) Documents cités:
- EP-A- 0 776 141
- WO-A-96/35304
- FR-A- 2 791 509
- US-A- 5 996 028
- US-A- 6 141 563
- SCHULTZ C P: "COMMUNICATION DEVICE INACTIVITY PASSWORD LOCK" MOTOROLA TECHNICAL DEVELOPMENTS,US,MOTOROLA INC. SCHAUMBURG, ILLINOIS, vol. 29, 1 novembre 1996 (1996-11-01), pages 91-92, XP000691885

## Description

La présente invention concerne le domaine de la lutte contre le vol ou l'utilisation frauduleuse de dispositifs dont le fonctionnement est susceptible d'être asservi à un logiciel, les dispositifs correspondants ainsi qu'une installation permettant la mise en oeuvre de ce procédé.

Il peut s'agir, en particulier, de terminaux de communication, c'est-à-dire, dans le sens donné ici à cette expression, de toute structure permettant une communication (émission / réception) avec un émetteur-récepteur externe, qu'il s'agisse de la ou d'une fonction essentielle de ladite structure, comme dans le cas de téléphones mobiles, d'ordinateurs portables, etc., ou d'une fonction rendue possible par les moyens susceptibles d'y être inclus, comme dans le cas d'un véhicule automobile, d'un bateau, d'un avion, etc... Il peut encore s'agir d'appareils n'assurant pas normalement de fonction de communication tels que caméscopes, appareils photographiques, etc.

Actuellement, le développement des nouvelles technologies va vers le "tout portable", d'où une multiplication des appareils ou dispositifs de communication dits "nomades", c'est-à-dire portables ou intégrables dans divers environnements ou, plus simplement, dont le fonctionnement n'est pas attaché à un lieu précis. Ce développement d'une nouvelle génération d'appareils portables, donc relativement petits et légers, s'est accompagné d'une augmentation des vols et/ou des utilisations frauduleuses suite à leur perte.

Un intérêt croissant a donc été porté au développement de systèmes permettant d'empêcher l'utilisation des appareils volés ou égarés, dissuadant ainsi tout voleur potentiel de passer à l'acte et encourageant la remise aux objets trouvés des appareils perdus.

En matière de téléphones mobiles, une première approche a consisté à mettre à profit le fait que certains appareils sont "dédiés", c'est-à-dire qu'ils comportent une ligne de programmation supplémentaire telle qu'ils ne peuvent fonctionner avec une autre carte SIM (d'après la nomenclature anglaise "Subscriber Identity Module") que celle qui a été fournie avec l'abonnement souscrit auprès d'un opérateur. Il est possible, en cas de vol ou de perte de l'appareil, d'en informer l'opérateur pour qu'il bloque l'abonnement.

Cependant, l'interruption de l'abonnement n'est pas automatique mais nécessite l'intervention de l'utilisateur auprès de l'opérateur.

Un autre inconvénient' de ce procédé réside dans le fait que le voleur peut aisément obtenir les codes informatiques,lui permettant de déverrouiller l'appareil et de donner la possibilité audit appareil de fonctionner avec une autre carte SIM.

De plus, ce procédé ne convient pas aux appareils dans lesquels la carte SIM peut être remplacée par une autre carte SIM. Il faudrait donc pouvoir bloquer, non pas l'abonnement, mais l'appareil lui-même.

Un procédé connu utilise, pour les téléphones mobiles, un système de codes, dits codes PIN (d'après la nomenclature anglaise "Personal Identification Number") et PUK (d'après la nomenclature anglaise "Personal Unlocking Key") que l'utilisateur choisit lui-même et qu'il entre dans la mémoire du téléphone. L'appareil a besoin du ou des code(s) PIN pour pouvoir lire la carte SIM et permettre l'utilisation de l'appareil. Par suite, à chaque mise sous tension, l'utilisateur doit entrer le ou les code(s) PIN, ce qui limite les risques d'utilisation frauduleuse de l'appareil, mais est extrêmement fastidieux. De plus, si le téléphone est volé alors qu'il se trouve sous tension, il suffit au voleur de ne pas le mettre hors tension pour pouvoir l'utiliser. Ce procédé présente, en outre, l'inconvénient de nécessiter l'entrée d'un ou plusieurs codes, dont les fonctions sont souvent mal comprises par les utilisateurs, ce qui débouche sur des erreurs de manipulation entraînant le blocage intempestif de l'appareil. De plus, les codes PIN utilisés sont facilement décryptables, ce qui en réduit l'utilité.

Un tel procédé de blocage utilisant différents codes PIN et le code IMSI (d'après la nomenclature anglaise "International Mobile Subscriber Identity") stocké dans la carte SIM est décrit dans EP 0 607 767.

Le document US 6 141 563 décrit un terminal ayant un lien de dépendance et/ou de proximité avec un composant amovible, notamment du type SIM, et dans lequel des clés de terminal et de composant sont utilisées et communiquées à un équipement externe.

L'invention a pour but de remédier aux inconvénients de la technique antérieure et pour ce faire, selon un premier aspect, elle propose un procédé pour la lutte contre le vol et/ou l'utilisation frauduleuse d'un dispositif dont le fonctionnement est susceptible d'être asservi à un logiciel et qui a un lien de dépendance et/ou de proximité avec au moins un composant amovible, dit "composant en place",
caractérisé en ce qu'il comprend les étapes suivantes :
a) le chargement, dans ledit dispositif, d'un logiciel de protection dans lequel est inscrit un code d'activation personnel à l'utilisateur, ou tout autre procédé d'authentification personnelle (comme, par exemple, la reconnaissance des empreintes digitales, de l'iris de l'oeil, de la signature ADN, etc...) et qui lui est nécessaire pour pouvoir rompre ledit lien de dépendance et/ou de proximité,
b) la fourniture à l'utilisateur autorisé dudit code d'activation,
   et, si ledit code d'activation n'a pas été entré dans le dispositif préalablement à la rupture dudit lien de dépendance et/ou de proximité :
c) le blocage du fonctionnement du dispositif, sous la commande dudit logiciel de protection.

Dans la présente description et dans les revendications, il faut entendre par :
- "composant amovible", tout élément aussi bien matériel (tel qu'une carte à puce, un périphérique informatique, un autre dispositif quelconque, etc.) qu'immatériel (tel qu'un logiciel par exemple) avec lequel le dispositif a un lien de dépendance et/ou de proximité ;
- par "lien de dépendance", le fait que le composant amovible est nécessaire par nature au fonctionnement du dispositif (telle qu'une carte SIM pour un téléphone mobile ou un film pour un appareil photographique) ou, plus généralement; le fait que le composant amovible est physiquement réuni audit dispositif, qu'il soit ou non nécessaire à son fonctionnement (telle qu'une imprimante à une unité centrale d'ordinateur), étant entendu qu'un même dispositif peut avoir un lien de dépendance avec plusieurs composants amovibles ;
- par "lien de proximité", le fait que le composant amovible, sans être nécessaire au fonctionnement du dispositif, ne puisse être éloigné au-delà d'une distance prédéterminée sans déclencher un signal, étant entendu, de manière similaire au lien de dépendance, qu'un même dispositif peut avoir un lien de proximité avec plusieurs composants amovibles (des moyens permettant de créer un tel lien de proximité existent, par exemple, dans le domaine des antivols pour bagages, un élément de l'antivol étant disposé dans le bagage et l'autre élément dans la poche du porteur, l'éloignement des deux éléments déclenchant une alarme) ;
- par "clé", tout code transmissible à distance et propre soit audit composant, tel que le code IMSI d'une carte SIM, soit au dispositif, tel qu'un code IMEI (d'après la nomenclature anglaise "International Mobil Equipment Identity").

On aura compris que l'invention met à profit le fait que la première démarche commise sur un dispositif dont le voleur ou l'utilisateur frauduleux peut être identifié ou localisé à partir de la clé de composant du composant en place, comme par exemple le code IMSI de la carte SIM d'un téléphone mobile, est l'extraction du composant en place en vue de sa substitution par un composant équivalent. De même, s'agissant du vol, par exemple, d'un ordinateur, la première démarche du voleur sera de le débrancher de ses périphériques. En contrôlant la licéité de cette extraction ou de ce débranchement, le procédé selon l'invention rend le vol sans intérêt et l'utilisation frauduleuse impossible, ce de façon très simple puisqu'il suffit à l'utilisateur de se faire enregistrer par le gestionnaire du service de protection et de charger dans son dispositif le logiciel de protection pour avoir la garantie que le composant en place avec lequel son dispositif a un lien de dépendance ne pourra pas être extrait ou débranché par qui ne connaît pas le code d'activation, sans qu'il en résulte le blocage dudit dispositif.

Un autre cas de figure est basé sur le fait que, une fois le dispositif volé, le voleur va fuir et donc s'éloigner de l'emplacement d'origine dudit dispositif où se trouve le composant amovible avec lequel le dispositif a un lien de proximité. En mettant à profit le dépassement de la distance prédéterminée, le procédé selon l'invention rend le vol sans intérêt et l'utilisation frauduleuse impossible, puisque le propriétaire du dispositif a la garantie que, dès que la distance entre ledit composant amovible et ledit dispositif volé devient supérieure à la distance prédéterminée, sans entrée préalable du code d'activation, il s'ensuit un blocage immédiat dudit dispositif.

On comprend que le code d'activation n'est entré, dans le dispositif, par l'utilisateur autorisé que s'il désire remplacer le composant en place par un composant équivalent ou débrancher momentanément le composant en place pour une raison ou pour une autre, dans le cas où le procédé repose sur la rupture du lien de dépendance, ou s'il désire éloigner le dispositif dudit composant amovible, au-delà de la distance prédéterminée, toutes opérations peu fréquentes ; la protection du dispositif n'implique donc aucune manipulation répétée et fastidieuse.

Selon une forme d'exécution préférée de l'invention, le procédé comporte, en outre, une étape consistant en :
d) le déclenchement, sous l'effet de l'entrée du code d'activation dans le dispositif, d'une temporisation offrant le temps nécessaire à la rupture et au rétablissement du lien de dépendance et/ou de proximité, et le cas échéant
e) le blocage du dispositif, si le lien de dépendance et/ou de proximité n'a pas été rétabli avant la fin dudit temps de temporisation.

Par "temporisation", il faut comprendre toute action visant à fixer une durée prédéterminée.

Par "rétablissement du lien de dépendance et/ou de proximité", il faut comprendre, dans le cas du lien de dépendance, la substitution d'un composant équivalent au composant en place ou le rebranchement du composant en place débranché momentanément, et, dans le cas du lien de proximité, le rapprochement du dispositif et du composant amovible à une distance inférieure à la distance d'éloignement prédéterminée.

L'étape e) est prévue pour éviter que l'utilisateur autorisé puisse laisser la protection déverrouillée sans rétablir le lien de dépendance et/ou de proximité, ce qui permettrait, eh cas de vol du dispositif dans cet état, l'utilisation dudit dispositif par un tiers.

Dans une forme d'exécution préférée, le procédé selon l'invention comporte, en outre, une étape consistant en :
f) le blocage du dispositif en cas d'entrées successives d'un nombre prédéterminé de codes d'activation erronés.

Le blocage du terminal pouvant résulter d'une erreur de l'utilisateur autorisé, le procédé selon l'invention prévoit avantageusement la possibilité d'une étape consistant en :
g) le déblocage dudit dispositif par le fournisseur du code d'activation.

Dans un mode d'exécution préféré appliqué au cas où le dispositif est un terminal de communication, ledit terminal et ledit composant en place ayant, chacun, des clés qui leur sont propres, dites respectivement "clé de terminal" et "clé de composant", le procédé comporte, en outre, les étapes consistant en :
h) l'enregistrement dans un équipement externe, comportant une base de données et un émetteur récepteur, d'au moins une donnée identifiant l'utilisateur autorisé dudit terminal ;
i) la communication par le terminal audit émetteur-récepteur de l'équipement externe de la clé de terminal et de la clé de composant dudit composant en place lors de la première mise en oeuvre du procédé ;
j) l'enregistrement, dans ladite base de données, de la clé de terminal et de la clé de composant dudit composant en place, et,
   en cas de substitution du composant en place par un composant équivalent dans les conditions prévues par le logiciel de protection,
k) la communication par le terminal audit émetteur-récepteur de l'équipement externe de la clé de terminal et de la clé de composant dudit composant équivalent, et
l) l'enregistrement dans la base de données de l'équipement externe de la clé de composant dudit composant équivalent, ce, à des fins de traçage.

Concomitamment au blocage du terminal et quelle qu'en soit la cause, en étape m), un message d'alerte peut être envoyé, depuis le terminal vers l'émetteur-récepteur de l'équipement externe, ou inversement, ou réciproquement, et éventuellement affiché et/ou une alarme peut être déclenchée.

Il peut être également prévu une étape n) qui consiste en la localisation du terminal et l'envoi par ce dernier de ses coordonnées géographiques à l'émetteur-récepteur de l'équipement externe. A cet effet, un GPS, par exemple, peut être incorporé au terminal. L'étape n) est avantageusement mise en oeuvre automatiquement, dès le blocage du terminal, et son intérêt est évident : la localisation du téléphone, ou plus généralement de l'appareil nomade, localise du même coup le voleur.

La plupart du temps, il est stocké, dans le terminal que l'on souhaite protéger, des données dont la perte peut être extrêmement gênante (cas, par exemple, d'un répertoire téléphonique) ou ayant un caractère confidentiel.

Dans une forme d'exécution particulière du procédé selon l'invention, celui-ci comprend, en cas de blocage du terminal par suite de la mise en oeuvre de l'étape c), e) ou f) ci-dessus, une étape supplémentaire consistant en :
o) le transfert de tout ou partie des données stockées dans ledit terminal vers la base de données dudit équipement externe et/ou
p) la destruction de tout ou partie des données stockées dans le terminal.

Ainsi, dans le cas de l'étape o), l'utilisateur autorisé pourra récupérer tout ou partie de, ses données depuis la base de données appartenant à l'équipement externe, base qui les stockera et les restituera à l'utilisateur autorisé, par téléchargement ou par l'intermédiaire de tout support approprié.

L'étape p) pourra consister à détruire soit uniquement les données qui ont été transférées au cours de l'étape o) décrite plus haut, soit uniquement des données qui ont été sélectionnées préalablement, par exemple lors de leur entrée dans le terminal, soit encore toutes les données stockées dans ledit terminal de communication. Un tel procédé est particulièrement utile dans le cas des ordinateurs portables pour permettre la destruction de tous les fichiers personnels ou que l'utilisateur autorisé désire garder secrets.

Le logiciel nécessaire à la mise en oeuvre du procédé selon l'invention et/ou son éventuel déblocage sera, de préférence, téléchargeable sur le terminal depuis l'équipement externe. Si le terminal n'est capable ni de recevoir un tel téléchargement, ni d'être chargé à partir d'un support quelconque (disquette, CD-ROM, etc.), une nécessaire adaptation devra être effectuée par le constructeur. Selon une autre forme d'exécution, le logiciel peut être directement implanté au sein du dispositif sur un moyen physique comme une carte ou une puce.

Selon un second aspect de la présente invention, celle-ci concerne un ensemble formé, d'une part, par un dispositif dont le fonctionnement est susceptible d'être asservi à un logiciel et, d'autre part, par au moins un composant amovible, dit "composant en place", avec lequel ledit dispositif a un lien de dépendance et/ou de proximité,
ledit dispositif étant chargé d'un logiciel de protection où est inscrit un code d'activation personnel à l'utilisateur autorisé du dispositif et qui est adapté :
α) à permettre à l'utilisateur autorisé de rompre momentanément le lien de dépendance et/ou de proximité entre son terminal et ledit composant amovible, et
β) à bloquer le terminal, s'il advient que le code d'activation n'a pas été entré préalablement à la rupture du lien de dépendance et/ou de proximité.

Avantageusement, le dispositif peut comprendre en outre :
γ) des moyens de déclenchement, sous l'effet de l'entrée de son code d'activation, d'une temporisation offrant le temps nécessaire à la rupture et au rétablissement du lien de dépendance et/ou de proximité, et
δ) des moyens de blocage agissant sur le dispositif si ledit lien de dépendance et/ou de proximité n'a pas été rétabli avant la fin du temps de temporisation.

Il peut comprendre en outre :
ε) des moyens de blocage agissant sur le dispositif en cas d'entrées successives d'un nombre prédéterminé de codes d'activation erronés.

Pour la mise en oeuvre des différentes étapes décrites plus haut à propos du procédé appliqué au cas d'une pluralité de dispositifs constitués chacun d'un terminal de communication ayant un lien de dépendance et/ou de proximité avec au moins un composant amovible, dit "composant en place", chaque terminal et chaque composant amovible comportant des clés qui leur sont propres, dites, respectivement, "clé de terminal" et "clé de composant", l'invention apporte une installation constituée d'une pluralité de tels terminaux et d'un équipement externe comprenant un émetteur-récepteur et une base de données adaptée à enregistrer, pour chaque terminal, au moins une donnée identifiant l'utilisateur autorisé, et les informations de clé de terminal et de clé de composant qui lui sont communiquées par ledit terminal.

Bien entendu, si un terminal donné a un lien de dépendance et/ou de proximité avec plusieurs composants en place et que plusieurs de ces composants en place ont été remplacés par des composants équivalents dans les conditions autorisées par le logiciel de protection, le terminal peut communiquer à l'équipement externe la clé de composant de chacun des composants équivalents de substitution.

L'installation peut, en outre, comporter :
ξ) des moyens d'envoi, en cas de blocage d'un terminal, d'un message d'alerte du terminal concerné vers l'émetteur-récepteur de l'équipement externe, ou inversement, ou réciproquement, et éventuellement des moyens d'affichage d'un tel message et/ou de déclenchement d'une alarme, lesquels moyens d'envoi/affichage et/ou déclenchement sont activés concomitamment avec lesdits moyens de blocage, et/ou
η) des moyens de localisation du terminal et d'envoi, par ce dernier, de ses coordonnées géographiques à l'émetteur-récepteur de l'équipement externe.

L'installation comprend, de préférence, également :
θ) des moyens de déblocage d'un terminal bloqué, moyens qui sont susceptibles d'être mis en oeuvre depuis l'équipement externe.

Appliquée à la protection de terminaux dans lesquels sont stockées des données, l'installation comprend avantageusement :
τ) des moyens de transfert de tout ou partie des données stockées dans le terminal concerné vers la base de données dudit émetteur-récepteur externe en cas de blocage d'un terminal et/ou
κ) des moyens de destruction de tout ou partie des données stockées dans ledit terminal en cas de blocage de celui-ci.

L'invention sera mieux comprise, et ses avantages ressortiront mieux, à la lumière de la description détaillée suivante faite en référence aux dessins annexés dans lesquels :
la figure 1 représente un diagramme en flux illustrant un mode de mise en oeuvre du procédé selon l'invention, appliqué à la protection d'un téléphone mobile et
la figure 2 est une représentation schématique d'une forme d'exécution de l'installation selon l'invention, d'application plus généralisée.

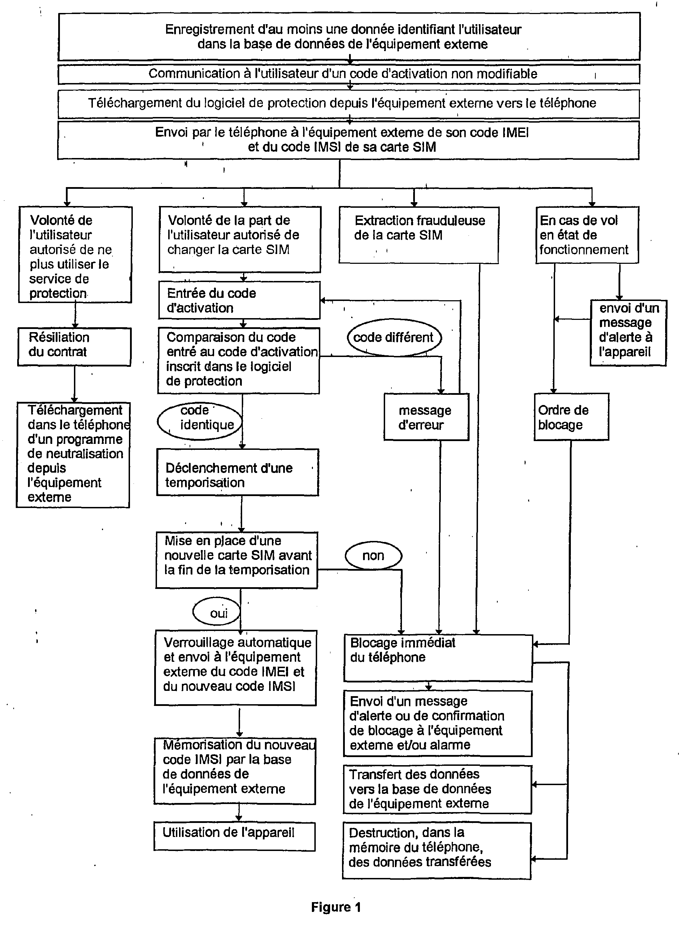

Si l'on se reporte à la figure 1, on voit les différentes étapes d'un mode de mise en oeuvre du procédé selon l'invention, mise en oeuvre qui nécessite le recours à un fournisseur de services, gestionnaire de ce qui a été appelé plus haut l'équipement externe.

La première étape, pour un utilisateur qui désire avoir recours aux services en question, consiste à faire enregistrer dans la base de données de l'équipement externe au moins une donnée permettant de l'identifier, donnée qui peut consister, par exemple, en son nom, son adresse, son numéro de téléphone, etc.

Cet enregistrement effectué, l'utilisateur devient pour l'équipement externe un "utilisateur autorisé" et il lui est fourni, par le gestionnaire du système de protection, un code d'activation non modifiable du programme de déverrouillage/temporisation/verrouillage de son téléphone tel que géré par un logiciel de protection, lequel est téléchargé dans le téléphone depuis l'émetteur-récepteur de l'équipement externe. Le code peut être fourni à l'utilisateur autorisé par courrier ou tout autre moyen confidentiel. Le code d'activation est également inscrit par le gestionnaire du système de protection dans le logiciel téléchargé sans être accessible, depuis ce logiciel, à tout utilisateur du téléphone.

Au cours de la phase suivante, le téléphone mobile communique à l'équipement externe
- son code IMEI ou un code associé à tout dispositif d'identification équivalent, et
- le code IMSI de la carte SIM qui l'équipe.

La protection contre le vol selon l'invention ne modifie en rien l'utilisation normale du téléphone par l'utilisateur autorisé.

Elle n'intervient qu'en cas de changement de la carte SIM. '

Si l'utilisateur autorisé du téléphone souhaite remplacer la carte SIM en place (séquence 1), par exemple s'il prête son téléphone mobile à un tiers possédant sa propre carte SIM et désirant se servir du téléphone sur son propre abonnement, l'utilisateur autorisé doit entrer au préalable le code d'activation qui lui a été communiqué par le gestionnaire du service de protection.

Le code entré est comparé à celui qui a été inscrit, par le gestionnaire du service de protection, dans le logiciel téléchargé et, s'il est correct (séquence 1.A), cela a pour effet de déclencher une temporisation au cours de laquelle il peut être procédé à un échange de carte SIM.

Si l'échange a bien été effectué avant le terme de la période de temporisation, il s'effectue (séquence 1.A.1) un verrouillage automatique du téléphone avec communication, par le téléphone à l'émetteur-récepteur de l'équipement externe, du code IMEI du téléphone ou du code associé à un dispositif d'identification équivalent, pour identification de l'utilisateur autorisé, ainsi que du code IMSI de la carte SIM de substitution, code qui est mémorisé par la base de données de l'équipement externe et qui, par la suite, sera considéré comme étant la clé du composant en place, reconnu comme composant autorisé. Cette sauvegarde dans la,base de données de l'équipement externe permet un traçage précis ainsi que des actions diverses de limitation de la fraude liée à l'usage du téléphone et de son ou ses composants amovibles.

Le téléphone fonctionne alors normalement, sans qu'il soit nécessaire d'effectuer une quelconque autre opération.

Si l'échange de carte SIM n'a pas été effectué avant le terme de la période de temporisation, le fonctionnement du téléphone est immédiatement bloqué (séquence 1.A.2).

Si l'utilisateur autorisé opère l'échange de façon trop lente et qu'il s'ensuive le blocage de son téléphone, il doit prendre contact avec le gestionnaire du service de protection pour en obtenir le déblocage.

Si le code d'activation entré au clavier dans le téléphone est incorrect (séquence 1.B), un message d'erreur s'affiche. Une répétition de trois erreurs successives entraîne le blocage du téléphone. Là encore, si les erreurs sont le fait de l'utilisateur autorisé, il peut obtenir le déblocage de son téléphone en prenant contact avec le gestionnaire du service de protection.

S'il y a extraction de la carte SIM en place sans entrée préalable du code d'activation (séquence 2), ce qui se produira le plus souvent en cas de vol du téléphone, il s'ensuivra le blocage automatique et immédiat du téléphone. Si cette extraction est le fait d'un utilisateur autorisé mais distrait, le déblocage pourra être obtenu comme indiqué plus haut.

En ce qui concerne le blocage, il s'effectue au moyen du logiciel chargé dans le téléphone, sans intervention de l'équipement externe, logiciel qui réagit à partir du moment où il y a tentative de substitution du composant en place par un composant équivalent sans entrée préalable du code d'activation, trois erreurs successives à l'entrée du code d'activation, ou dépassement du temps de temporisation après entrée du code d'activation correct. Un tel blocage peut être effectué par tout moyen connu de l'homme de l'art, par exemple la désactivation d'un organe du téléphone comme le blocage du fonctionnement des touches du clavier.

En ce qui concerne le déblocage, il s'effectue, comme on l'a vu plus haut, depuis, l'équipement externe, en utilisant là encore tout moyen connu de l'homme de l'art, comme un téléchargement d'instructions de déblocage.

De préférence et quelle que soit la cause du blocage du téléphone, un message d'alerte sera envoyé, et éventuellement affiché, depuis le téléphone vers l'émetteur-récepteur externe, ou inversement, ou réciproquement. Une alarme pourra être déclenchée. Ainsi, en cas de tentative de substitution non autorisée de la carte SIM ou en cas de dépassement du temps disponible pour une substitution autorisée, il pourra apparaître sur l'écran du téléphone un message "fonctionnement bloqué" et une alarme pourra être déclenchée, ce qui, en cas de vol, signalera au voleur l'inutilité de son acte et, en cas de dépassement du temps de temporisation, informera l'utilisateur autorisé de la nécessité de prendre contact avec le gestionnaire du système de protection. Dans les mêmes circonstances, un message pourra être reçu ou affiché par l'émetteur-récepteur externe ce qui, en cas de vol du téléphone, pourra permettre au gestionnaire du service de protection d'aviser l'utilisateur autorisé que le fonctionnement de son dispositif perdu ou volé a été bloqué.

Dans une forme d'exécution préférée de l'invention, quelle que soit la raison du blocage du téléphone, les données qui y sont contenues, par exemple le répertoire téléphonique, seront en tout ou partie transférées vers, et stockées dans, la base de données de l'équipement externe qui les restituera à l'utilisateur autorisé de toute manière convenable, de préférence par téléchargement depuis l'équipement externe, soit vers le téléphone dudit utilisateur autorisé s'il se trouve toujours en sa possession dans le cas d'un blocage de son fait, soit vers un nouveau téléphone de remplacement dans le cas d'un vol. Les données transférées vers la base de données de l'équipement externe et stockées à titre temporaire dans celle-ci pourront simultanément être détruites dans la mémoire du téléphone, empêchant ainsi toute personne autre que l'utilisateur autorisé d'y avoir accès.

Dans le cas où l'utilisateur autorisé souhaite ne plus utiliser le service de protection selon l'invention, il lui suffit (séquence 3) de résilier le contrat conclu avec le gestionnaire dudit service, l'équipement externe téléchargeant un programme de neutralisation du logiciel de protection précédemment téléchargé dans le téléphone, avec pour conséquence que le remplacement de la carte SIM en place par une autre redevient possible sans code d'activation.

La présente invention envisage également le cas du vol du téléphone alors qu'il se trouve en fonctionnement. En l'état, le voleur pourra utiliser, jusqu'à épuisement de la batterie, le téléphone volé.

Pour éviter une telle situation, il est prévu (séquence 4) que l'équipement externe, après que le propriétaire du téléphone a signalé le vol au gestionnaire du service, puisse envoyer directement au téléphone un ordre de blocage qui peut éventuellement être accompagné d'un message d'alerte et/ou d'une alarme.

Le téléphone se trouve alors irrémédiablement bloqué tandis que les données contenues dans le téléphone peuvent être transférées vers l'équipement externe et/ou détruites de la mémoire du téléphone.

Bien que l'on se soit référé ci-dessus, par commodité, à la protection d'un téléphone mobile, il est bien entendu que le procédé est applicable à tout terminal de communication, dans la définition qui est donnée plus haut, ou même, dans sa forme d'exécution la plus simple, à tout dispositif dont le fonctionnement est susceptible d'être asservi à un logiciel.

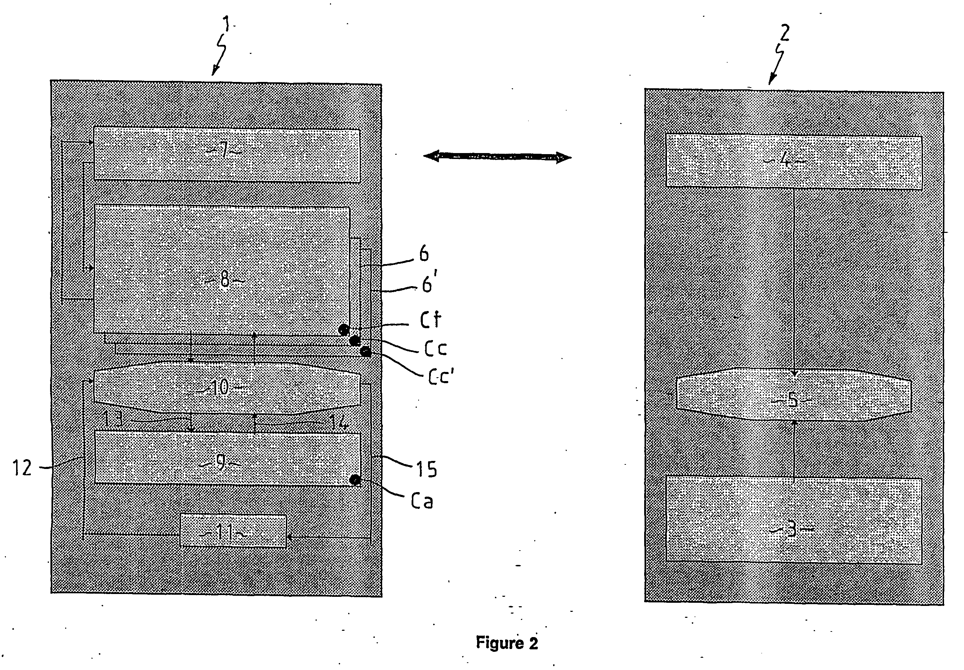

Si l'on se reporte maintenant à la figure 2, celle-ci représente un exemple d'installation conforme à la présente invention, d'application plus généralisée.

Plus particulièrement, l'installation est composée d'une série de terminaux de communication dont un seul 1 est représenté et d'un équipement externe 2 comportant une base de données 3 capable d'enregistrer, notamment, au moins une donnée identifiant l'utilisateur autorisé et un code d'activation Cₐ pour chacun des terminaux, un émetteur-récepteur 4 qui est en communication avec lesdits terminaux et réciproquement, et un dispositif de traitement de l'information 5 mettant en relation ledit émetteur-récepteur 4 et ladite base de données 3. La communication peut être d'ordre électronique, magnétique, etc.

Chaque terminal de communication 1, auquel est associée une clé de terminal Cₜ, a un lien de dépendance avec au moins un composant amovible, dit composant en place 6, 6' auquel est associée une clé de composant C_{c}, C_{c}'. Le terminal 1 comprend un dispositif de communication 7 capable de communiquer avec l'émetteur-récepteur 4 de l'équipement externe 2, un espace de stockage 8 d'informations internes au terminal (clé de terminal Cₜ) ainsi que des informations internes à chaque composant en place (clés de composant C_{c}, C_{c}'), un espace de stockage 9 d'informations externes à l'appareil (logiciel de protection et code d'activation Cₐ) et une unité de traitement de l'information 10 mettant en relation les deux de espaces de stockage 8 et 9.

Le dispositif de communication 7 de chaque terminal est capable de communiquer à l'émetteur-récepteur 4 de l'équipement externe sa clé de terminal Cₜ et la ou les clés de composant C_{c}, C_{c}' de ses composants en place pour enregistrement dans la base de données 3. En outre, après une modification autorisée d'un des composants en place 6, 6' par un composant équivalent, ladite base de données 3 enregistre la clé de composant dudit composant équivalent.

Le terminal 1 comporte, en outre, un clavier 11 au moyen duquel le code d'activation Cₐ peut être entré dans le terminal et transmis selon 12 à l'unité de traitement de l'information 10 qui l'envoie selon 13 à l'espace de stockage 9 pour comparaison, par le logiciel de protection, avec le code d'activation qui y est inscrit. Selon 14 est retourné à l'unité de traitement 10 le résultat de la comparaison. Si le code d'activation entré est correct, l'utilisateur peut extraire ou débrancher un composant en place 6 et remplacer ce composant ou le rebrancher dans le délai autorisé par le logiciel. Dans le cas contraire, le logiciel de protection envoie, selon 14, des instructions de blocage, par exemple de blocage du clavier 11 selon la ligne 15.

De telles instructions de blocage sont également envoyées, s'il advient que le composant en place 6 ou 6' est extrait sans entrer le code d'activation Cₐ.

Pour le reste, le fonctionnement se fait comme il a été décrit plus haut à propos de la figure 1, le cas échéant, mutatis mutandis.

Bien que dans les formes d'exécution illustrées par les figures, on se soit référé à des systèmes reposant sur la rupture d'un lien de dépendance, il est clair que les explications données s'appliquent tout aussi bien aux systèmes reposant sur la rupture d'un lien de proximité.

Comme il ressort de la description qui précède, l'invention permet aussi bien d'empêcher l'utilisation d'un dispositif volé ou perdu, que de retrouver le propriétaire d'un dispositif trouvé. En outre, la protection s'exerçant en permanence, sans intervention de l'utilisateur, cela constitue un facteur favorable vis-à-vis des compagnies d'assurances.

## Revendications

1. Procédé pour la lutte contre le vol et/ou l'utilisation frauduleuse d'un dispositif (1) dont le fonctionnement est susceptible d'être asservi à un logiciel et qui a un lien de dépendance et/ou de proximité avec au moins un composant amovible, dit composant en place (6,6'),
**caractérisé en ce qu'**il comprend les étapes suivantes :
a) le chargement, dans ledit dispositif (1), d'un logiciel de protection dans lequel est inscrit un code d'activation (Cₐ) personnel à l'utilisateur et qui lui est nécessaire pour pouvoir rompre ledit lien de dépendance et/ou de proximité,
b) la fourniture à l'utilisateur autorisé dudit code d'activation (Cₐ),
et, si ledit code d'activation (Cₐ) n'a pas été entré dans le dispositif (1) préalablement à la rupture dudit lien de dépendance et/ou de proximité :
c) le blocage du fonctionnement du dispositif (1), sous la commande dudit logiciel de protection.

2. Procédé selon la revendication 1, **caractérisé en ce qu'**il comporte, en outre, une étape consistant en :
d) le déclenchement, sous l'effet de l'entrée du code d'activation (Cₐ) dans le dispositif (1), d'une temporisation offrant le temps nécessaire à la rupture et au rétablissement du lien de dépendance et/ou de proximité, et le cas échéant
e) le blocage du dispositif (1), si le lien de dépendance et/ou de proximité n'a pas été rétabli avant la fin dudit temps de temporisation.

3. Procédé selon la revendication 1 ou 2, **caractérisé en ce qu'**il comporte, en outre, une étape consistant en :
f) le blocage du dispositif (1) en cas d'entrées successives d'un nombre prédéterminé de codes d'activation erronés.

4. Procédé selon l'une quelconque des revendications précédentes, **caractérisé en ce qu'**il comporte, en outre, une étape consistant en :
g) le déblocage dudit dispositif par le fournisseur du code d'activation.

5. Procédé selon l'une quelconque des revendications précédentes appliqué au cas où le dispositif (1) est un terminal de communication, ledit terminal (1) et ledit composant en place (6,6') ayant, chacun, des clés qui leur sont propres, dites respectivement clé de terminal (Cₜ) et clé de composant (C_{c}, C_{c}'), **caractérisé en ce que** le procédé comporte, en outre, les étapes consistant en :
h) l'enregistrement dans un équipement externe (2), comportant une base de données (3) et un émetteur-récepteur (4), d'au moins une donnée identifiant l'utilisateur autorisé dudit terminal (1) ;
i) la communication par le terminal (1) audit émetteur-récepteur (4) de l'équipement externe (2) de la clé de terminal (Cₜ) et de la clé de composant (C_{c}, C_{c}') dudit composant en place (6,6') lors de la première mise en oeuvre du procédé ;
j) l'enregistrement, dans ladite base de données (3), de la clé de terminal (Cₜ) et de la clé de composant (C_{c}, C_{c}') dudit composant en place (6,6'), et,
en cas de substitution du composant en place (6,6') par un composant équivalent dans les conditions prévues par le logiciel de protection,
k) la communication par le terminal (1) audit émetteur-récepteur (4) de l'équipement externe (2) de la clé de terminal (Cₜ) et de la clé de composant dudit composant équivalent, et
l) l'enregistrement dans la base de données (3) de l'équipement externe (2) de la clé de composant dudit composant équivalent.

6. Procédé selon la revendication 5, **caractérisé en ce qu'**il comporte une étape supplémentaire consistant en :
m) l'envoi d'un message d'alerte depuis le terminal (1) vers l'émetteur-récepteur (4) de l'équipement externe (2), ou inversement, ou réciproquement, et éventuellement son affichage et/ou le déclenchement d'une alarme, et/ou
n) la localisation du terminal (1) et l'envoi, par ce dernier, de ses coordonnées géographiques à l'émetteur-récepteur (4) de l'équipement externe (2).

7. Procédé selon la revendication 5 ou 6, **caractérisé en ce qu'**il comprend, en cas de blocage du terminal (1) par suite de la mise en oeuvre de l'étape c), e) ou f) ci-dessus, une étape supplémentaire consistant en :
o) le transfert de tout ou partie des données stockées dans ledit terminal (1) vers la base de données (3) dudit équipement externe (2) et/ou
p) la destruction de tout ou partie des données stockées dans le terminal (1).

8. Procédé selon l'une quelconque des revendications 4 à 7, **caractérisé en ce qu'**il consiste à débloquer un terminal (1) bloqué par téléchargement sur ledit terminal, depuis l'équipement externe (2), d'instructions de déblocage.

9. Ensemble formé, d'une part, par un dispositif (1) dont le fonctionnement est susceptible d'être asservi à un logiciel et, d'autre part, par au moins un composant amovible, dit composant en place (6,6') avec lequel ledit dispositif (1) a un lien de dépendance et/ou de proximité,
**caractérisé en ce que** ledit dispositif (1) est chargé d'un logiciel de protection où est inscrit un code d'activation (Cₐ) personnel à l'utilisateur autorisé du dispositif (1) et qui est adapté :
α) à permettre à l'utilisateur autorisé de rompre momentanément le lien de dépendance et/ou de proximité entre son terminal (1) et ledit composant en place (6,6'), et
β) à bloquer le terminal (1), s'il advient que le code d'activation (Cₐ) n'a pas été entré préalablement à la rupture du lien de dépendance et/ou de proximité.

10. Ensemble selon la revendication 9, **caractérisé en ce que** ledit dispositif (1)comprend en outre :
γ) des moyens de déclenchement, sous l'effet de l'entrée de son code d'activation (Cₐ), d'une temporisation offrant le temps nécessaire à la rupture et au rétablissement du lien de dépendance et/ou de proximité, et
δ) des moyens de blocage agissant sur le dispositif (1) si ledit lien de dépendance et/ou de proximité n'a pas été rétabli avant la fin du temps de temporisation.

11. Ensemble selon la revendication 9 ou 10,
**caractérisé en ce qu'**il comprend, en outre :
ε) des moyens de blocage agissant sur le dispositif (1) en cas d'entrées successives d'un nombre prédéterminé de codes d'activation erronés.

12. Installation, **caractérisée en ce qu'**elle est formée :
- d'une pluralité de dispositifs constitués chacun d'un terminal (1) de communication ayant, avec au moins un composant amovible, dit composant en place (6,6'), un lien de dépendance et/ou de proximité dont la rupture, sans entrée préalable d'un code d'activation (Cₐ), géré par un logiciel de protection, entraîne le blocage dudit terminal, chaque terminal (1) et chaque composant en place (6,6') comportant des clés qui leur sont propres, dites, respectivement, clé de terminal (Cₜ) et clé de composant (C_{c}, C_{c}'), et
- d'un équipement externe (2) comprenant un émetteur-récepteur (4) et une base de données (3), adaptée à enregistrer, pour chaque terminal (1), au moins une donnée identifiant l'utilisateur autorisé, et les informations de clé de terminal (Cₜ) et de clé de composant (C_{c}, C_{c}') qui sont communiquées à l'équipement externe (2) par ledit terminal (1).

13. Installation selon la revendication 12, **caractérisée en ce qu'**elle comporte en outre :
ξ) des moyens d'envoi, en cas de blocage d'un terminal (1), d'un message d'alerte du terminal concerné vers l'émetteur-récepteur (4) de l'équipement externe (2), ou inversement, ou réciproquement, et éventuellement des moyens d'affichage d'un tel message et/ou de déclenchement d'une alarme, lesquels moyens d'envoi/affichage et/ou alarme sont activés concomitamment avec lesdits moyens de blocage, et
η) des moyens de localisation du terminal et d'envoi, par ce dernier, de ses coordonnées géographiques à l'émetteur-récepteur de l'équipement externe.

14. Installation selon la revendication 10 ou 11, **caractérisée en ce qu'**elle comprend en outre :
θ) des moyens de déblocage d'un terminal (1) bloqué, moyens qui sont susceptibles d'être mis en oeuvre depuis l'équipement externe (2).

15. Installation selon l'une quelconque des revendications 12 à 14 appliquée à la protection de terminaux (1) dans lesquels sont stockées des données, **caractérisée en ce qu'**elle comprend en outre :
τ) des moyens de transfert de tout ou partie des données stockées dans le terminal (1) concerné vers la base de données (3) dudit émetteur-récepteur (4) de l'équipement externe en cas de blocage d'un terminal (1) et/ou
κ) des moyens de destruction de tout ou partie des données stockées dans ledit terminal (1) en cas de blocage de celui-ci.

## Claims

1. A method for combating the theft and/or fraudulent use of a device (1) the operation of which is likely to be under the control of software and which has a dependence and/or proximity link with at least one removable component, referred to as an in-place component (6, 6'), which method is **characterized in that** it includes the following steps:
a) the loading, into said device (1), of protection software in which an activation code (Cₐ) that is personal to the user is recorded and which the user requires in order to be able to break said dependence and/or proximity link,
b) the provision of said activation code (Cₐ) to the authorized user, and,
if said activation code (Cₐ) was not entered in the device (1) before the breakage of said dependence and/or proximity link:
c) the blocking of the operation of the device (1), under the command of said protection software.

2. The method as claimed in claim 1, **characterized in that** it additionally includes a step consisting of :
d) the initiation, through the effect of entering the activation code (Cₐ) in the device (1), of a timer providing the time required to break and re-establish the dependence and/or proximity link, and if necessary
e) the blocking of the device (1) if the dependence and/or proximity link was not re-established before the end of said time period of the timer.

3. The method as claimed in claim 1 or 2, **characterized in that** it additionally includes a step consisting of:
f) the blocking of the device (1) in the event of successive inputs of a predetermined number of erroneous activation codes.

4. The method as claimed in any of the preceding claims, **characterized in that** it additionally includes a step consisting of:
g) the unblocking of said device by the provider of the activation code.

5. The method as claimed in any of the preceding claims which method is applied to the case in which the device (1) is a communication terminal, said terminal (1) and said in-place component (6, 6') each having its specific key, respectively referred to as terminal key (Cₜ) and component key (C_{c}, C_{c}'), which method is **characterized in that** it additionally includes the steps consisting of:
h) the recording in external equipment (2), including a database (3) and a transceiver (4), of at least one item of data identifying the authorized user of said terminal (1);
i) the communication by the terminal (1), to said transceiver (4) of the external equipment (2), of the terminal key (Cₜ) and of the component key (C_{c}, C_{c}') of said in-place component (6, 6') during first use of the method;
j) the recording, in said database (3), of the terminal key (Cₜ) and of the component key (C_{c}, C_{c}') of said in-place component (6, 6'), and,
in the event that the in-place component (6, 6') is replaced by an equivalent component in the conditions specified by the protection software,
k) the communication by the terminal (1), to said transceiver (4) of the external equipment (2), of the terminal key (Cₜ) and of the component key of said equivalent component, and
l) the recording, in the database (3) of the external equipment (2), of the component key of said equivalent component.

6. The method as claimed in claim 5, **characterized in that** it includes an additional step consisting of:
m) the sending of an alert message from the terminal (1) to the transceiver (4) of the external equipment (2), or vice versa, or reciprocally, and possibly its display and/or the triggering of an alarm, and/or
n) the locating of the terminal (1) and the sending, by the latter, of its geographic coordinates to the transceiver (4) of the external equipment (2).

7. The method as claimed in claim 5 or 6, **characterized in that** it includes, in the event of the terminal (1) being blocked as a result of the execution of the abovementioned step c), e), or f), an additional step consisting of:
o) the transfer of all or some of the data stored in said terminal (1) to the database (3) of said external equipment (2) and/or
p) the destruction of all or some of the data stored in the terminal (1).

8. The method as claimed in any of claims 4 to 7, **characterized in that** it consists in unblocking a blocked terminal (1) by downloading unblocking instructions from the external equipment (2) to said terminal.

9. An assembly formed, firstly, of a device (1) the operation of which is likely to be under the control of software and, secondly, of at least one removable component, referred to as an in-place component (6, 6'), with which said device (1) has a dependence and/or proximity link,
which assembly is **characterized in that** said device (1) is loaded with protection software in which an activation code (Cₐ) that is personal to the authorized user of the device (1) is recorded and which is designed to:
α) allow the authorized user to temporarily break the dependence and/or proximity link between his terminal (1) and said in-place component (6, 6'), and
β) block the terminal (1), if it turns out that the activation code (Cₐ) was not entered before the breakage of the dependence and/or proximity link.

10. The assembly as claimed in claim 9, **characterized in that** said device (1) additionally includes:
γ) means for triggering, through the effect of entering its activation code (Cₐ), a timer providing the time required to break and re-establish the dependence and/or proximity link, and
δ) blocking means acting on the device (1) if said dependence and/or proximity link was not re-established before the end of the time period of the timer.

11. The assembly as claimed in claim 9 or 10, **characterized in that** it additionally includes:
ε) blocking means acting on the device (1) in the event of successive inputs of a predetermined number of erroneous activation codes.

12. An installation, **characterized in that i**t is formed of:
- a plurality of devices each consisting of a communication terminal (1) having a dependence and/or proximity link with at least one removable component, referred to as an in-place component (6, 6'), the breakage of said dependence and/or proximity link resulting in the blocking of said terminal if said activation code (Cₐ), managed by a protection software, was not entered before the breakage, each terminal (1) and each in-place component (6, 6') having its specific key, respectively referred to as terminal key (Cₜ) and component key (C_{c}, C_{c}'), and
- external equipment (2) including a transceiver (4) and a database (3), designed to record, for each terminal (1), at least one item of data identifying the authorized user, and the terminal key (Cₜ) and component key (C_{c}, C_{c}') information which is communicated to the external equipment (2) by said terminal (1).

13. The installation as claimed in claim 12, **characterized in that** it additionally includes:
ξ) means for sending, in the event of a terminal (1) being blocked, an alert message from the terminal concerned to the transceiver (4) of the external equipment (2), or vice versa, or reciprocally, and possibly means for displaying such a message and/or for triggering an alarm, which sending/displaying and/or alarm means are activated together with said blocking means, and
η) means for locating the terminal and for the sending, by the latter, of its geographic coordinates to the transceiver of the external equipment.

14. The installation as claimed in claim 10 or 11, **characterized in that** it additionally includes:
θ) means for unblocking a blocked terminal (1), which means are likely to be executed from the external equipment (2).

15. The installation as claimed in any of claims 12 to 14, and which installation is applied to the protection of terminals (1) in which data is stored, which installation is **characterized in that** it additionally includes:
τ) means for transferring all or some of the data stored in the terminal (1) concerned to the database (3) of said transceiver (4) of the external equipment in the event of a terminal (1) being blocked and/or
κ) means of destroying all or some of the data stored in said terminal (1) in the event of the latter being blocked.

## Patentansprüche

1. Verfahren zum Schutz einer Vorrichtung (1), deren Betrieb einer Software unterworfen sein kann und die eine Verbindung der Abhängigkeit und/oder der Nähe mit mindestens einer lösbaren Komponente, Ortskomponente (6, 6') genannt, aufweist, vor Diebstahl und/oder betrügerischer Verwendung,
**dadurch gekennzeichnet, dass** es die folgenden Schritte umfasst:
a) das Laden in die Vorrichtung (1) einer Schutzsoftware, in die ein persönlicher Aktivierungscode (Cₐ) des Benutzers eingeschrieben ist und die er benötigt, um diese Abhängigkeits- und/oder Näheverbindung unterbrechen zu können,
b) die Lieferung dieses Aktivierungscodes (Cₐ) an den befugten Benutzer,
und, wenn der Aktivierungscode (Cₐ) nicht vor der Unterbrechung der Abhängigkeits- und/oder Näheverbindung in die Vorrichtung (1) eingegeben worden war:
c) die Blockierung des Betriebs der Vorrichtung (1) unter der Steuerung durch die Schutzsoftware.

2. Verfahren nach Anspruch 1, **dadurch gekennzeichnet, dass** es außerdem einen Schritt umfasst, der besteht in:
d) der Auslösung einer Verzögerung, die die für die Unterbrechung und die Wiederherstellung der Abhängigkeits- und/oder Näheverbindung erforderliche Zeit bietet, unter der Wirkung der Eingabe des Aktivierungscodes (Cₐ) in die Vorrichtung (1) und gegebenenfalls
e) der Blockierung der Vorrichtung (1), wenn die Abhängigkeits- und/oder Näheverbindung nicht vor dem Ende der Verzögerungszeit wiederhergestellt wurde.

3. Verfahren nach Anspruch 1 oder 2, **dadurch gekennzeichnet, dass** es außerdem einen Schritt umfasst, der besteht in:
f) der Blockierung der Vorrichtung (1) im Fall aufeinanderfolgender Eingaben einer vorbestimmten Anzahl von falschen Aktivierungscodes.

4. Verfahren nach einem der vorhergehenden Ansprüche, **dadurch gekennzeichnet, dass** es außerdem einen Schritt umfasst, der besteht in:
g) der Entblockierung der Vorrichtung durch den Lieferant des Aktivierungscodes.

5. Verfahren nach einem der vorhergehenden Ansprüche, angewandt auf den Fall, in dem die Vorrichtung (1) ein Kommunikationsterminal ist, wobei der Terminal (1) und die Ortskomponente (6, 6') jeweils eigene Schlüssel besitzen, Terminalschlüssel (Cₜ) bzw. Komponentenschlüssel (C_{c}, C_{c}') genannt, **dadurch gekennzeichnet, dass** das Verfahren außerdem die Schritte umfasst, die bestehen in:
h) der Aufzeichnung mindestens einer den befugten Benutzer des Terminals (1) identifizierenden Information in einer externen Einrichtung (2), die eine Datenbasis (3) und einen Sender/Empfänger (4) umfasst;
i) der Mitteilung des Terminalschlüssels (Cₜ) und des Komponentenschlüssels (C_{c}, C_{c}') der Ortskomponente (6, 6') durch den Terminal (1) an den Sender/Empfänger (4) der externen Einrichtung (2) bei der ersten Durchführung des Verfahrens;
j) der Aufzeichnung des Terminalschlüssels (Cₜ) und des Komponentenschlüssels (C_{c}, C_{c}') der Ortskomponente (6, 6') in die Datenbasis (3), und
im Fall des Ersetzens der Ortskomponente (6, 6') durch eine äquivalente Komponente unter den von der Schutzsoftware vorgesehenen Bedingungen
k) der Mitteilung des Terminalschlüssels (Cₜ) und des Komponentenschlüssels der äquivalenten Komponente durch den Terminal (1) an den Sender/Empfänger (4) der externen Einrichtung (2) und
l) der Aufzeichnung des Komponentenschlüssels der äquivalenten Komponente in der Datenbasis (3) der externen Einrichtung (2).

6. Verfahren nach Anspruch 5, **dadurch gekennzeichnet, dass** es einen zusätzlichen Schritt umfasst, der besteht in:
m) der Sendung einer Warnmeldung vom Terminal (1) zum Sender/Empfänger (4) der externen Einrichtung (2) oder umgekehrt oder gegenseitig und gegebenenfalls ihrer Anzeige und/oder der Auslösung eines Alarms und/oder
n) der Ortung des Terminals (1) und der Sendung seiner geografischen Koordinaten durch diesen an den Sender/Empfänger (4) der externen Einrichtung (2).

7. Verfahren nach Anspruch 5 oder 6, **dadurch gekennzeichnet, dass** es im Fall der Blockierung des Terminals (1) infolge der Durchführung des oben genannten Schritts c), e) oder f) einen zusätzlichen Schritt umfasst, der besteht in:
o) der Übertragung aller in dem Terminal (1) gespeicherten Daten oder eines Teils davon zur Datenbasis (3) der externen Einrichtung (2) und/oder
p) der Zerstörung aller in dem Terminal (1) gespeicherten Daten oder eines Teils davon.

8. Verfahren nach einem der Ansprüche 4 bis 7, **dadurch gekennzeichnet, dass** es darin besteht, dass ein blockierter Terminal (1) durch Herunterladen von Entblockierungsbefehlen von der externen Einrichtung (2) zum Terminal entblockiert wird.

9. Einheit, die einerseits aus der Vorrichtung (1), deren Betrieb einer Software unterworfen sein kann, und andererseits aus mindestens einer lösbaren Komponente, Ortskomponente (6, 6') genannt, gebildet ist, mit der die Vorrichtung (1) eine Abhängigkeits- und/oder Näheverbindung besitzt,
**dadurch gekennzeichnet, dass** die Vorrichtung (1) mit einer Schutzsoftware geladen ist, in die ein persönlicher Aktivierungscode (Cₐ) des befugten Benutzers der Vorrichtung (1) eingeschrieben ist und die dafür ausgelegt ist:
α) dem befugten Benutzer zu gestatten, momentan die Abhängigkeits- und/oder Näheverbindung zwischen seinem Terminal (1) und der Ortskomponente (6, 6') zu unterbrechen, und
β) den Terminal (1) zu blockieren, wenn es geschieht, dass der Aktivierungscode (Cₐ) nicht vor der Unterbrechung der Abhängigkeits- und/oder Näheverbindung eingegeben worden war.

10. Einheit nach Anspruch 9, **dadurch gekennzeichnet, dass** die Vorrichtung (1) außerdem umfasst:
γ) Mittel zum Auflösen einer Verzögerung, die die für die Unterbrechung und die Wiederherstellung der Abhängigkeits- und/oder Näheverbindung erforderliche Zeit bietet, unter der Wirkung der Eingabe seines Aktivierungscodes (Cₐ) und
δ) Blockierungsmitteln, die auf die Vorrichtung (1) einwirken, wenn die Abhängigkeits- und/oder Näheverbindung nicht vor dem Ende der Verzögerungszeit wiederhergestellt wurde.

11. Einheit nach Anspruch 9 oder 10, **dadurch gekennzeichnet, dass** sie außerdem umfasst:
ε) Blockierungsmittel, die im Fall von aufeinanderfolgenden Eingaben einer vorbestimmten Anzahl von falschen Aktivierungscodes auf die Vorrichtung (1) einwirken.

12. Anlage, **dadurch gekennzeichnet, dass** sie gebildet ist von:
- einer Mehrzahl von Vorrichtungen, die jeweils aus einem Kommunikationsterminal (1) bestehen, der mit mindestens einer lösbaren Komponente, Ortskomponente (6, 6') genannt, eine Abhängigkeits- und/oder Näheverbindung besitzt, deren Unterbrechung ohne vorhergehende Eingabe eines durch eine Schutzsoftware verwalteten Aktivierungscodes (Cₐ) die Blockierung des Terminals mit sich bringt, wobei jeder Terminal (1) und jede Ortskomponente (6, 6') eigene Schlüssel umfassen, Terminalschlüssel (Cₜ) bzw. Komponentenschlüssel (C_{c}, C_{c}') genannt, und
- einer externen Einrichtung (2), die einen Sender/Empfänger (4) und eine Datenbasis (3) umfasst, die dafür ausgelegt ist, für jeden Terminal (1) mindestens eine den befugten Benutzer identifizierende Information und die Terminalschlüssel- (Cₜ) und Komponentenschlüssel- (C_{c}, C_{c}') Informationen aufzuzeichnen, die der externen Einrichtung (2) durch den Terminal (1) mitgeteilt werden.

13. Anlage nach Anspruch 12, **dadurch gekennzeichnet, dass** sie außerdem umfasst:
ξ) Mittel zum Senden einer Alarmmeldung im Fall der Blockierung eines Terminals (1) von dem betreffenden Terminal zu dem Sender/Empfänger (4) der externen Einrichtung (2) oder umgekehrt oder wechselseitig und gegebenenfalls Mittel zur Anzeige einer solchen Meldung und/oder zur Auslösung eines Alarms, wobei die Sende/Anzeige- und/oder Alarmmittel gleichzeitig mit den Blockierungsmitteln aktiviert werden, und
η) Mittel zur Ortung des Terminals und zum Senden seiner geografischen Koordinaten von diesem zum Sender/Empfänger der externen Einrichtung.

14. Anlage nach Anspruch 10 oder 11, **dadurch gekennzeichnet, dass** sie außerdem umfasst:
θ) Mittel zum Entblockieren eines blockierten Terminals (1), wobei diese Mittel von der externen Einrichtung (2) aus in Betrieb gesetzt werden können.

15. Anlage nach einem der Ansprüche 12 bis 14, angewandt auf den Schutz von Terminals (1), in denen Daten gespeichert sind, **dadurch gekennzeichnet, dass** sie außerdem umfasst:
τ) Mittel zur Übertragung aller in dem betreffenden Terminal (1) gespeicherten Daten oder eines Teils davon zu der Datenbasis (3) des Senders/Empfängers (4) der externen Einrichtung im Fall der Blockierung eines Terminals (1) und/oder
κ) Mittel zur Zerstörung aller in dem Terminal (1) gespeicherten Daten oder eines Teils davon im Fall dessen Blockierung.
